# EUROPEAN PATENT APPLICATION

(11) **EP 1 610 556 A1**
(43) Date of publication of application: **28.12.2005**
(21) Application number: 05252921.1
(22) Date of filing: 12.05.2005
(51) Int. Cl.: H04N 7/173, H04N 5/445, G06F 17/30

(54) **Method for displaying link number tags to links on web pages and video system using the same**

(30) Priority: 22.06.2004 KR 2004046454
(71) Applicant: SAMSUNG ELECTRONICS CO., LTD., Suwon-si, Gyeonggi-do (KR)
(72) Inventor: Ha, Seung-chul, Yeongtong-gu, Suwon-si, Gyeonggi-do (KR)
(74) Representative: Waddington, Richard

(57) **Abstract**

A method of additionally displaying link numbers to links on a web page and a video system using the same. The method of displaying link numbers on the web page for a video system which performs any of an image-receiving function, an image-reproducing function, and an image-recording function includes: storing web pages downloaded from an external communication network; checking links on the stored web pages; assigning link numbers to the checked links; and displaying the link numbers to the links when the web pages are displayed. Accordingly, the video system can additionally display the link numbers to the links on the web pages to enable one to select links by inputting numbers through a key input unit (160) such as a remote controller (164).

## Description

The present invention relates to a web page display method and video system using the same, and more particularly to a web page display method for downloading through the internet and displaying web pages and a video system using the same.

Together with the technical advancement and popularity of the internet, a TV, referred to as an internet TV hereinafter, has appeared which can be connected to the internet so that one can surf web sites via the internet. Thus, one can surf the web through the internet TV rather than personal computers (PCs).

The web pages displayed during such surfing consist of information such as text, images, and so on, and links. The links on the web pages are provided in order for one to easily move to other web pages. That is, if one picks up a link by using a pointer displayed on a web page, a linked web page is displayed.

When using PCs, one can easily pick up a link by using a mouse. However, in general, one controls the internet TV with a key input unit such as a remote controller other than the mouse. However, since the key input unit is not a device suitable to move the pointer, one experiences inconvenience in picking up (selecting) links during web surfing on the internet TV.

Further, the wireless mouse can be used to easily pick up a link, but it costs users extra expense. In addition, the wireless mouse should be used on a flat pad or the like, but one does not watch the internet TV on such a flat surface, for example, on a desk as he or she works with a PC, which causes a problem.

Therefore, an approach is required that one can pick up a link on web pages more conveniently by using a key input unit such as remote controllers.

Thus, there is a need for an arrangement which addresses the above drawbacks and other problems associated with the conventional arrangement

The present invention provides a method and video system capable of additionally displaying links number tags to links on a web page in order for one to select individual links by inputting numbers through a key input unit such as a remote controller.

According to the present invention there is provided an apparatus and method as set forth in the appended claims. Preferred features of the invention will be apparent from the dependent claims, and the description which follows.

According to an aspect of the present invention, there is provided a method of displaying link numbers on a web page for a video system which performs at least one of an image-receiving function, an image-reproducing function, or an image-recording function, including: storing a web page downloaded from an external communication network; checking links on the stored web page; assigning link numbers to the checked links; and additionally processing to display the link numbers near the links when the web page is displayed.

The method may also include: selecting one of the link numbers; and downloading through the external communication network and storing a web page connected to a link corresponding to the selected link number.

The method may also include databasing and storing the link numbers assigned to the checked links and Uniform Resource Locators (URLs) of the web pages connected to the checked links. The downloading may include downloading through the external communication network and stores the web page connected to the link corresponding to the selected link number by using the stored link numbers and web page URLs.

The video system may be any of a TV, a set-top box, a digital video disc (DVD) player, a DVD recorder, a compact disc (CD) player, a CD recorder, a video cassette recorder (VCR), a multimedia player, a moving-picture player, a MP3 player, a mobile phone, a personal digital assistant (PDA), and an audio system.

According to another aspect of the present invention, there is provided a video system which is operable to perform at least one of an image-receiving function, an image-reproducing function, or an image-recording function which includes: a storage unit for storing a web page downloaded through an external communication network; and a controller for checking links on the stored web page, for assigning link numbers to the checked links, and for processing to display the link numbers near the links when the web page is displayed.

The video system may include a key input unit for selecting at least one of the link numbers. The controller may be operable to download through the external communication network and to store in the storage unit a web page connected to a link corresponding to the selected link numbers.

Further, the key input unit may include: a remote controller for selecting one of the link numbers; and a light-receiving unit for sending to the controller a link number picked up through the remote controller.

The video system may also include a memory for storing a database of the link numbers assigned to the checked links and Uniform Resource Locators (URLs) of the web pages connected to the checked links. The controller may be operable to download through the external communication network and store in the storage unit the web page connected to the link corresponding to the selected link number by using the link numbers and web page URLs stored in the memory.

The video system may also include an image-receiving unit externally for receiving image data. Further, the image-receiving unit may be a TV module or a set-top box module receiving broadcast signals.

The video system may also include an image recording/reproducing for unit carrying out an image-recording process and/or an image-reproducing process. Further, the image recording/reproducing unit may be any of a DVD-playing module, a DVD-recording module, a VCR module, a multimedia-playing module, a moving-picture playing module, a CD-playing module, a CD-recording module, a MP3-playing module, a mobile phone, a PDA, and an audio system.

According to another aspect of the present invention, there is provided a method of displaying a web page, including: receiving a link number display command; checking links on a web page; assigning link numbers to the checked links; storing the assigned link numbers and uniform resource locators (URLS) to which the checked links are connected; and displaying the web page with link numbers near the checked links.

According to another aspect of the present invention, there is provided video system, including: a storage section for storing a web page; a control section for checking links on the web page and assigning link numbers to the checked links; and a display section for displaying the web page with the link numbers near the checked links.

Additional and/or other aspects and advantages of the present invention will be set forth in part in the description which follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:
FIG. 1 is a block diagram showing a video system capable of additionally displaying link number tags to links on web pages according to an embodiment of the present invention;
FIG. 2 is a flowchart explaining a process for additionally displaying link number tags to links on web pages according to an embodiment of the present invention;
FIG. 3A is a view showing an exemplary web page to which the process of FIG. 2 is applicable; and
FIG. 3B is a view showing the web page of FIG. 3A on which link number tags are displayed according to the process of FIG. 2.

Reference will now be made in detail to an embodiment of the present invention, examples of which are illustrated in the accompanying drawings, wherein like reference numerals refer to the like elements throughout. The embodiment is described below in order to explain the present invention by referring to the figures.

In the following description, same drawing reference numerals are used for the same elements even in different drawings. Also, well-known functions or constructions are not described in detail.

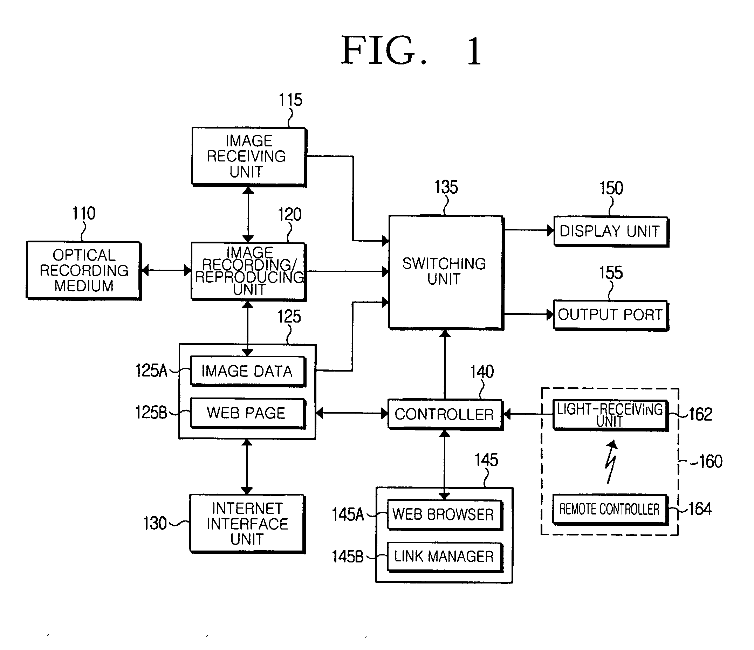

FIG. 1 is a block diagram showing a video system capable of additionally displaying link number tags to links on web pages according to an embodiment of the present invention. In FIG. 1, the video system has an optical recording medium 110, an image-receiving unit 115, an image recording/reproducing unit 120, a hard disc drive (HDD) 125, an internet interface unit 130, a switching unit 135, a controller 140, a memory 145, a display unit 150, an output port 155, and a key input unit 160.

The optical recording medium 110 is a recording medium such as, by way of non-limiting examples, digital video discs (DVDs), compact discs (CDs), and the like, in which image data can be stored. The image-receiving unit 115 externally receives image data. In detail, the image-receiving unit 115 receives broadcast signals through an antenna, cable, by way of non-limiting examples. In addition, the image-receiving unit 115 can also receive image data from, by way of non-limiting examples, a digital camera, a digital camcorder, a PC, and the like. The image recording/reproducing unit 120 records and plays the image data. In detail, the image recording/reproducing unit 120 plays image data stored in the optical recording medium 110 or HDD 125, or records in the optical recording medium 110 or HDD 125 image data received from the image-receiving unit 115. Further, the image recording/reproducing unit 120 can copy to the HDD 125 image data stored in the optical recording medium 110, or to the optical recording medium 110 image data 125A stored in the HDD 125.

The internet interface unit 130 receives and stores in the HDD 125 web pages (not shown) from the internet (not shown). The HDD 125 is a recording medium on which image data 125A and a web page 125B are stored.

The switching unit 135 switches on or off the display unit 150 or the output port 155 so that any of image data received by the image-receiving unit 115, image data reproduced from the image recording/reproducing unit 120, and the web page 125B stored in the HDD 125 is outputted through any of the display unit 150 and the output port 155. The display unit 150 may be, by way of non-limiting examples, a display unit on which image data and web pages are displayed, such as a cathode ray tube (CRT), a liquid crystal display (LCD), a plasma display panel (PDP), and the like.

The key input unit 160 is a user interface unit for inputting and sending a user's operation command to the controller 140. The key input unit 160 can be provided with a remote controller 164 for outputting an operation signal corresponding to a user's operation command and a light-receiving unit 162 for inputting and sending an output signal of the remote controller 164 to the controller 140. The remote controller 164 is provided with input keys of numbers 0 ~ 9. The key input unit 160, instead of the light-receiving unit 162 and the remote controller 164, can be formed with operation keys being the input keys of numbers 0 ~ 9 on the front panel of the video system.

The controller 140 loads a driving program (not shown) stored in the memory 145, drives the video system according to a user's command received through the key input unit 160, and controls the overall operations of the video system. Further, the controller 140 loads a web browser 145A stored in the memory 145 to enable one to surf web sites through the video system.

In particular, the controller 140 controls the video system to additionally display link number tags to links on web pages, which enables one to select a link on the web page by inputting a link number through the key input unit 160. To do so, the controller 140 loads a link manager 145B stored in the memory 145. The link manager 145B is an application program enabling the controller 140 to check links that are on the web page 125B stored in the HDD 125, sequentially assign link numbers to the checked links, and store in the memory 145 assigned link numbers and the uniform resource locators (URLs) of web pages connected to the checked links.

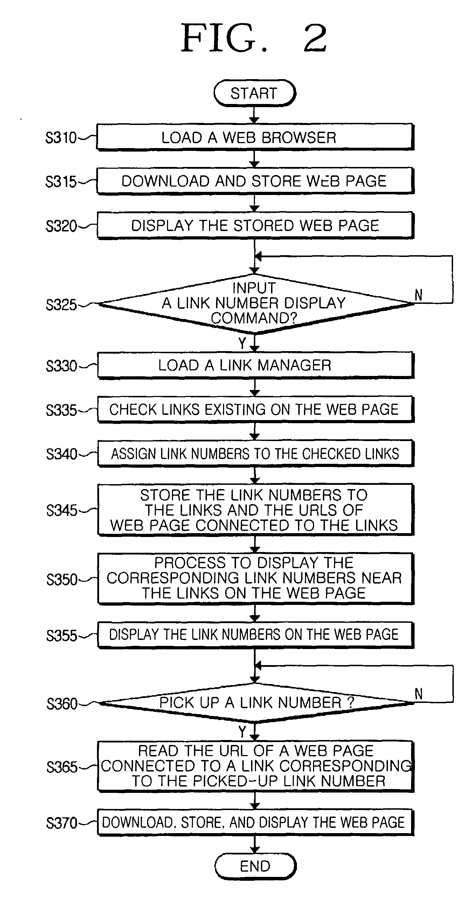

Hereinafter, description will be made in detail, with reference to FIG. 2, of a process of additionally displaying link number tags to the links on web pages.

FIG. 2 is a flowchart explaining such a process according to an embodiment of the present invention. The process is performable by the video system of FIG. 1 and is, for ease of explanation, described in conjunction with that figure. However, it is to be understood that the process of FIG. 2 is performable by other systems.

First, the controller 140 loads the web browser 145A stored in the memory 145 (S310). Next, as a user surfs web page by using the web browser 145A, the web page is downloaded to the internet interface unit 130, and the downloaded web page is stored in the HDD 125 (S315).

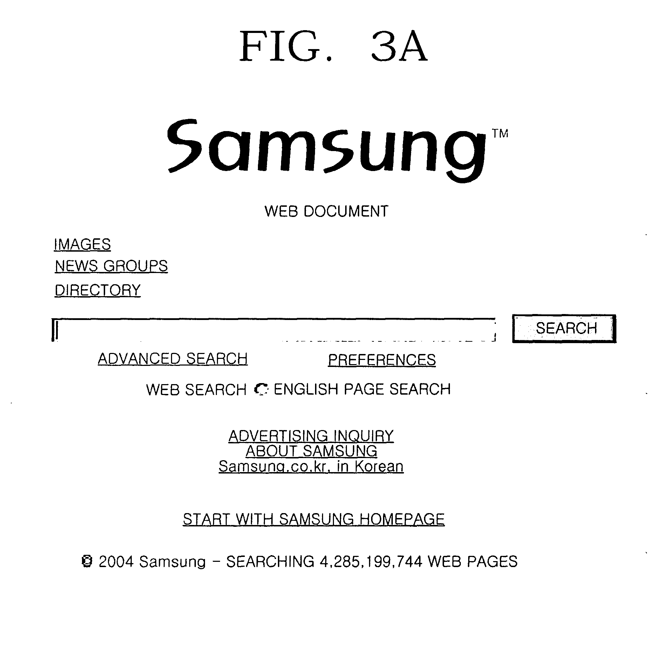

Next, the web page 125B stored in the HDD 125 is displayed on a display unit (S320). In detail, the web page 125B can be sent to and displayed on the display unit 150 through the switching unit 135, or sent to and displayed on an external display unit such as a TV or monitor through the switching unit 135 and the output port 155. FIG. 3A shows an exemplary displayed web page.

Thus, the user can keep surfing web pages through the web browser 145A, using the remote controller 164. The user can move a pointer displayed on web pages by using the up, down, left, and right direction keys (▲/▼/ 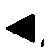 / 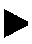 ) of the remote controller 164. Further, if the pointer is located on a link on a web page, the user can surf to web pages connected to the link by using an 'input' key or a 'selection key' of the remote controller 164.

On the other hand, the user can easily surf to web pages by inputting a 'link number display command' through the remote controller 164. For the input of the 'link number display command', the remote controller 164 may have a separate 'link number display' key, or have a specific key, one of the existing keys, set for the input of the 'link number display command'.

If the 'link number display command' is inputted through the 'link number display' key or the specific key (S325), the controller 140 loads the link manager 145B stored in the memory 145 (S330).

If the link manager 145B is loaded and run, the controller 140 checks links existing on the web page 125B stored in the HDD 125 (S335). Further, the controller 140 assigns numbers to the checked links in order, respectively (S340), databases (stores in a database) the link numbers assigned to the respective links and the URLs of web pages connected to the respective links, and stores the database in the memory 145 (S345).

In detail, if the controller 140 finds a link on the web page 125B, the controller 140 assigns the number of '1' to the link, and stores in the memory 145 as the URL to the link with the number of '1' the web page connected to the link. Thereafter, if the controller 140 finds one more link on the web page 125B, the controller 140 assigns the number of '2' to the link, and stores in the memory 145 as the URL to the link with the number of '2' the web page connected to the link. As above, the process finding links, assigning link numbers, and storing URLs proceeds over the entire web page 125B, that is, from the beginning to the end of the web page 125B.

Thereafter, the controller 140 refers to the link numbers stored in the memory 145, and processes to display the link number tags near the links appearing on a web page, respectively (S350).

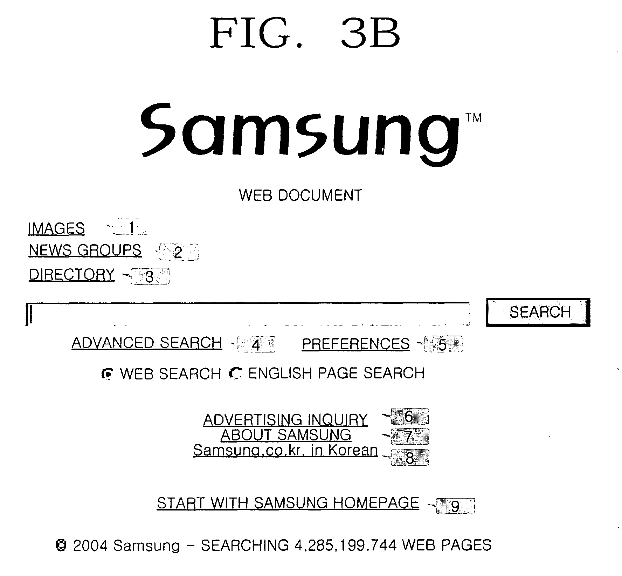

As a result, the link number tags are displayed on the web page appearing on the display unit (S355). FIG. 3B is a view showing a web page of FIG. 3A with the link number tags appearing as the result. As shown in FIG. 3B, it can be seen that the link numbers 1 - 9 are assigned near the corresponding links appearing on the web page.

Next, the user can pick up (select) his or her desired link numbers 1 ~ 9 shown in FIG. 3B by using the number input keys of the remote controller 164. If a link number has two digits, one can input the link number in a manner of inputting the two digits within a predetermined time of period. Further, one can pick up a link number with the 'selection' key by having the cursor pointed to any of the link numbers 1 ~ 9 appearing on the web page and moved in order around the link numbers by using the channel up/down key of the remote controller 164.

If a link number is picked up by any of the above methods (S360), the controller 140 reads out of the memory 145 the URL of a web page connected to the link corresponding to the selected link number (S365).

Further, the controller 140 downloads the web page through the internet interface unit 130 by using the read-out URL, stores the web page in the HDD 125, and displays the stored web page on the display unit (S370).

Thereafter, the above steps can be repeated in order for link numbers to be added to links on a newly displayed web page.

The present invention refers to the HDD 125 as a recording medium in which the image data 125A and the web page 125B are stored, but any recording medium can be substituted for the HDD 125 if the recording medium can store the image data 125A and the web page 125B.

Further, the internet may be either wire or wireless internet, if connectable to the video system.

So far, description has been made on a process for additionally displaying link number tags to links on web pages so that one can pick up links by inputting numbers through a key input device such as the remote controller 164. Further, the video system which can store in the optical recording medium 110 and play images and receive broadcast signals is referred to as a video system to which the process is applied. However, such a video system is merely an exemplary one for the convenience of explanation of an embodiment the present invention. Thus, the above description is not intended to limit to the kinds of video systems to which the above-described embodiment of the present invention is applicable.

That is, the above-described embodiment of the present can be applied to a video system having any one of or any combination of the above 'image-playing' function, 'image-recording' function, and 'image-receiving' function. Thus, the above-described embodiment of the present invention can be applied to the video system such as a TV, a set-top box, a DVD player, a DVD recorder, a VCR, a multimedia player, a moving-picture player, a CD player, a CD recorder, a MP3 player, a mobile phone, a PDA, an audio system, among others, as well as to combination video systems having any combination of the above players, recorders, and system.

As aforementioned, the above-described embodiment of the present invention embodiment can additionally display link number tags to links on web pages, and enables one to pick up a link by inputting numbers through the key input unit such as a remote controller. Thus, the present invention enables one to pick up a link on the web pages more conveniently.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of displaying link numbers on a web page for a video system which performs at least one of an image-receiving function, an image-reproducing function, or an image-recording function, comprising:
a) storing a web page downloaded from an external communication network;
b) checking links on the stored web page;
c) assigning link numbers to the checked links; and
d) processing to display the link numbers near the links when the web page is displayed.

2. The method as claimed in claim 1, further comprising:
e) selecting one of the link numbers; and
f) downloading through the external communication network and storing a web page connected to a link corresponding to the selected link number.

3. The method as claimed in claim 2, further comprising databasing and storing the link numbers assigned to the checked links and Uniform Resource Locators (URLs) of the web pages connected to the checked links,
wherein the downloading includes downloading through the external communication network and storing the web page connected to the link corresponding to the selected link number by using the stored link numbers and web page URLs.

4. The method as claimed in any preceding claim, wherein the video system is any of a TV, a set-top box, a digital video disc (DVD) player, a DVD recorder, a compact disc (CD) player, a CD recorder, a video cassette recorder (VCR), a multimedia player, a moving-picture player, a MP3 player, a mobile phone, a personal digital assistant (PDA), and an audio system.

5. A video system which is operable to perform at least one of an image-receiving function, an image-reproducing function, or an image-recording function, comprising:
a storage unit (125) for storing a web page downloaded through an external communication network; and
a controller (140) for checking links on the stored web page, for assigning link numbers to the checked links, and for processing to display the link numbers near the links when the web page is displayed.

6. The video system as claimed in claim 5, further comprising a key input unit (160) for selecting at least one of the link numbers,
wherein the controller (140) is operable to download through the external communication network and to store in the storage unit (125) a web page connected to a link corresponding to the selected link numbers.

7. The video system as claimed in claim 6, wherein the key input unit (160) includes:
a remote controller (164) for selecting one of the link numbers; and
a light-receiving unit (162) for sending to the controller (140) a link number selected through the remote controller (164).

8. The video system as claimed in claim 6 or claim 7, further comprising a memory (145) for storing a database of the link numbers assigned to the checked links and Uniform Resource Locators (URLs) of the web pages connected to the checked links,
wherein the controller (140) is operable to download through the external communication network and to store in the storage unit (125) the web page connected to the link corresponding to the selected link number by using the link numbers and web page URLs stored in the memory (145).

9. The video system as claimed in any one of claims 5 to 8, further comprising an image-receiving unit (115) for externally receiving image data.

10. The video system as claimed in claim 9, wherein the image-receiving unit (115) is either a TV module or a set-top box module receiving broadcast signals.

11. The video system as claimed in any one of claims 5 to 10, further comprising an image recording/reproducing unit (120) for performing at least one of an image-recording process and an image-reproducing process.

12. The video system as claimed in claim 11,
wherein the image recording/reproducing unit (120) is any of a DVD-playing module, a DVD-recording module, a VCR module, a multimedia-playing module, a moving-picture playing module, a CD-playing module, a CD-recording module, a MP3-playing module, a mobile phone, a PDA, and an audio system.

13. A method of displaying a web page, comprising:
receiving a link number display command;
checking links on a loaded web page;
assigning link numbers to the checked links;
storing the assigned link numbers and uniform resource locators (URLS) to which the checked links are connected; and
displaying the loaded web page with link numbers near the checked links.

14. The method as claimed in claim 13, wherein the checking includes loading a link manager (145B), the link manager (145B) being a program enabling a control section (140) to check the links, assign the link numbers, and store the assigned link numbers.

15. The method as claimed in claim 13 or claim 14,
wherein, in the assigning, the link numbers are sequentially assigned to the checked links in a one to one relationship.

16. The method as claimed in claim 15, wherein, in the assigning, the link numbers are sequentially assigned from a top to a bottom of the loaded web page and from a first side of the loaded web page to a second side opposite the first side of the loaded web page.

17. A video system, comprising:
a storage section (125) for storing a web page;
a control section (140) for checking links on the web page and for assigning link numbers to the checked links; and
a display section (150) for displaying the web page with the link numbers near the checked links.

18. The video system as claimed in claim 17, wherein the control section (140) is operable to process information relating to the web page and the assigned link numbers for display thereof.

19. The video system as claimed in claim 17 or claim 18, further comprising a memory (145) operable to store a link manager (145B) which is a program enabling the control section (140) to check the links.

20. The video system as claimed in any one of claims 17 to 19, further comprising an input unit (160) which is operable to send an operation command indicating a selection of a link on the web page.

21. The video system as claimed in claim 20, wherein the input unit (160) includes:
a remote controller (164) for selecting a link number; and
a light-receiving unit (162) for sending to the controller (140) a link number selected through the remote controller (164).

22. The video system as claimed in claim 21, wherein the operation command is operable to indicate movement of a pointer on the web page in accordance with a directional key of the remote controller (164), a selection of a link on the web page corresponding to a specified button of the remote controller (164), or the selection of a link number corresponding to numerical keys of the remote controller (164).
